# EUROPÄISCHE PATENTSCHRIFT

(11) **EP 3 067 572 B1**
(45) Veröffentlichungstag und Bekanntmachung des Hinweises auf die Patenterteilung: **04.10.2017**
(21) Anmeldenummer: 16000343.0
(22) Anmeldetag: 11.02.2016
(51) Int. Cl.: F15B 13/044, F16K 11/07, F16K 31/06

(54) **VENTIL**
VALVE
SOUPAPE

(30) Priorität: 11.03.2015 DE 102015003094
(43) Veröffentlichungstag der Anmeldung: 14.09.2016
(73) Patentinhaber: Hydac Fluidtechnik GmbH, 66280 Sulzbach/Saar (DE)
(72) Erfinder: Bill, Markus, 66265 Heusweiler (DE); Hell, Franz-Rudolf, 66822 Lebach (DE); Heß, Maximilian Felix, 66117 Saarbrücken (DE)
(74) Vertreter: Bartels & Partner

(56) Entgegenhaltungen:
- DE-A1-102004 017 088
- DE-U1-202006 014 780
- JP-A- 2010 019 319
- JP-U- S5 420 029
- JP-U- S5 819 178
- US-A- 5 653 421
- US-B2- 8 567 758

## Beschreibung

Die Erfindung betrifft ein Ventil mit den Merkmalen im Oberbegriff von Anspruch 1.

Elektromagnetisch ansteuerbare Ventile sind in den verschiedenartigsten Auslegungen und für eine Vielzahl von Anwendungen in Fluid- oder Hydrauliksystemen Stand der Technik (DE 10 2004 017 088 A1, DE 10 2004 017 088 B4). In manchen sicherheitskritischen Ventil-Anwendungen werden elektrisch betätigte Ventile den an die Funktions- und Arbeitssicherheit zu stellenden Anforderungen nicht gerecht. Bei Störungen des zugehörigen elektrischen Systems mit Stromausfall oder Spannungseinbruch besteht die Gefahr der ungewollten und/oder ungesteuerten Veränderung der bei Eintritt der Störung vom Ventil eingenommenen Schaltstellung, wodurch ein Betriebszustand eingeleitet werden kann, der die Sicherheit des Systems und/oder des betreffenden Bedienpersonals gefährdet.

Die JP S54-20029U beschreibt ein Ventil mit einem in einem Ventilgehäuse längsverfahrbar geführten Steuerschieber, der mehrere Fluid-Anschlussstellen im Ventilgehäuse wahlweise fluidführend miteinander verbindet oder voneinander trennt, und der mittels mindestens eines Betätigungsmagneten ansteuerbar ist, wobei eine Rasteinrichtung dergestalt vorhanden ist, dass bei Ausfall des Betätigungsmagneten der Steuerschieber in einer definierten Position gehalten ist.

Weitere Ventile gehen aus der DE 10 2004 017 088 A1, der JP 2010-019319, der DE 20 2006 014 780 U1, der US 5 653 421, der JP S58-19178 und der US 8 567 758 B2 hervor.

Im Hinblick auf diese Problematik stellt sich die Erfindung die Aufgabe, ein Ventil der eingangs genannten Gattung zur Verfügung zu stellen, das sich durch eine erhöhte Betriebssicherheit auszeichnet.

Erfindungsgemäß ist diese Aufgabe durch ein Ventil gelöst, das die Merkmale des Patentanspruchs 1 in seiner Gesamtheit aufweist. Das erfindungsgemäße Ventil zeichnet sich demgemäß dadurch aus, dass ein vorderes Ankerteil des Betätigungsmagneten in einem Adapter geführt ist, der über eine magnetische Trennstelle mit einem Ende eines Polrohr-Gehäuses des Betätigungsmagneten verbunden ist, und dass eine Abdichtung zwischen dem Pohlrohr-Gehäuse und dem Adapter mittels eines Dichtringes gebildet ist.

Es ist ferner vorgesehen, dass eine Rasteinrichtung dergestalt vorhanden ist, dass bei Ausfall des Betätigungsmagneten der Steuerschieber in einer definierten Position gehalten ist. Dadurch, dass das Ventil bei Wegfall der Betätigungskraft durch Stromausfall oder Stromeinbruch in dem jeweils geschalteten Zustand verbleibt, ist sichergestellt, dass eine elektrische Störung nicht zu einer ungewollten, möglicherweise gefährlichen Änderung des Betriebszustands führt. So ist bei Ventil-Anwendungen, wie etwa bei Gangschaltungen, ein Umschalten zwischen Gangstufen, wie Schnellgang und Langsamgang, die Veränderung von Achssperren oder die Änderung einer Vorsteuerung bei Logikventilen in Sicherheitsanwendungen mit der erfindungsgemäßen Ventillösung vermieden.

Als Schaltventil, das in zwei definierte Ventilstellungen einstellbar ist, kann das erfindungsgemäße Ventil mit Vorteil als 4/2-Wege-Schieberventil mit einem Druckanschluss, zwei Nutzanschlüssen und einem Tankanschluss konzipiert sein, wobei der Steuerschieber durch die Rasteinrichtung in einer ersten Position, in der der Druckanschluss mit dem ersten Nutzanschluss und der zweite Nutzanschluss mit dem Tankanschluss verbunden sind, und in einer zweiten Position gehalten ist, bei der der Druckanschluss mit dem zweiten Nutzanschluss und der erste Nutzanschluss mit dem Tankanschluss verbunden sind. Die erfindungsgemäße Rastlösung lässt sich aber auch für eine Vielzahl anderer Ventilkonzepte zwangslos einsetzen, beispielsweise für Wege-Schieberventile mit nur zwei Schaltstellungen (2/2-Wegeventil).

Bei besonders vorteilhaften Ausführungsbeispielen weist der Betätigungsmagnet zwei gesondert bestrombare, in Axialrichtung des zugehörigen Ankers nebeneinander angeordnete Spulen auf, die bei Bestromen die Verfahrbewegung des Ankers und des mit ihm mechanisch verbundenen Steuerschiebers in gegenläufige Richtungen in die erste oder zweite Position ermöglichen. Eine derartige elektromagnetische Betätigung mittels einer Kombination aus einem sog. "drückenden" Magneten und einem sog. "ziehenden" Magneten ist Stand der Technik. Beispielsweise zeigt die DE 10 2004 017 088 B4 ein elektromagnetisches Betätigungssystem dieser Art.

Mit besonderem Vorteil kann die Anordnung so getroffen sein, dass die Rasteinrichtung zwischen dem Anker oder einem mit diesem verbundenen Teil und dem Polrohr oder einem mit diesem verbundenen Gehäuseteil des Betätigungsmagneten wirksam ist, wobei im Polrohr oder dem damit verbundenen Gehäuseteil zwei Rastkerben in einem axialen Abstand voneinander angeordnet sein können, der der Länge des Verschiebeweges des Steuerschiebers zwischen dessen erster und zweiter Position entspricht.

Für die Rasteinrichtung kann in dem mit dem Steuerschieber mechanisch verbundenen Anker oder dem mit diesem verbundenen Teil eine zur Verfahrachse senkrechte Durchgangsbohrung ausgebildet sein, die an den Enden je eine Rastkugel aufnimmt, die durch eine in der Bohrung befindliche Schraubenfeder für den Eintritt in die Rastkerben nach außen hin vorgespannt sind. Es liegt noch im Bereich der Erfindung in umgekehrter Weise die Rastgeometrie im Ventilkolben vorzusehen und die Rastkugeln, die federvorgespannt sind im Ventilkolben führenden Gehäuse anzuordnen.

Um die Rasteinrichtung bezüglich der erzeugten Rast- oder Haltekraft derart auszubilden, dass die normale, bei Bestromung einer jeweiligen Spule erzeugte Betätigungskraft ausreicht, die Rastkraft und gegebenenfalls eine entgegenwirkende Strömungskraft zu überwinden, dass jedoch andererseits bei fehlerhafter oder fehlender Bestromung der Steuerschieber auch bei gegebenenfalls angreifender Strömungskraft in der gegebenen Position verharrt, sind die Rastkerben an dem der jeweils anderen Rastkerbe zugewandten Ende durch eine Schrägfläche begrenzt, die ein Überlaufen bei normaler Betätigungskraft erlaubt. Die Rastkerben können durch im Polrohr oder in einem Adapter umlaufend eingearbeitete Ringnuten gebildet sein.

Gemäß dem Patentanspruch 8 ist Gegenstand der Erfindung auch eine Vorrichtung mit mindestens einem Betätigungsmagneten zur elektromagnetischen Betätigung von in definierte Ventilstellungen einstellbaren Ventilen, insbesondere von Schieberventilen nach einem der Ansprüche 1 bis 7. Dank dieser erfindungsgemäßen Adapter- oder Nachrüstlösung lassen sich auch bereits im Einsatz befindliche Ventile der genannten Art nachrüsten, um dergestalt die Sicherheit bei deren Betrieb in hydraulischen Gesamt-Kreisläufen zu erhöhen.

Nachfolgend ist die Erfindung anhand von in der Zeichnung dargestellten Ausführungsbeispielen im Einzelnen erläutert. Es zeigen:
- Fig. 1: teilweise in Seitenansicht und teilweise im Längsschnitt ein Ausführungsbeispiel des erfindungsgemäßen Ventils;

- Fig. 2: einen vergrößerten Längsschnitt lediglich des mittleren Längenbereichs von Fig. 1; und
- Fig. 3: teilweise in Seitenansicht und teilweise im Längsschnitt ein Ausführungsbeispiel der erfindungsgemäßen elektromagnetischen Betätigungsvorrichtung.

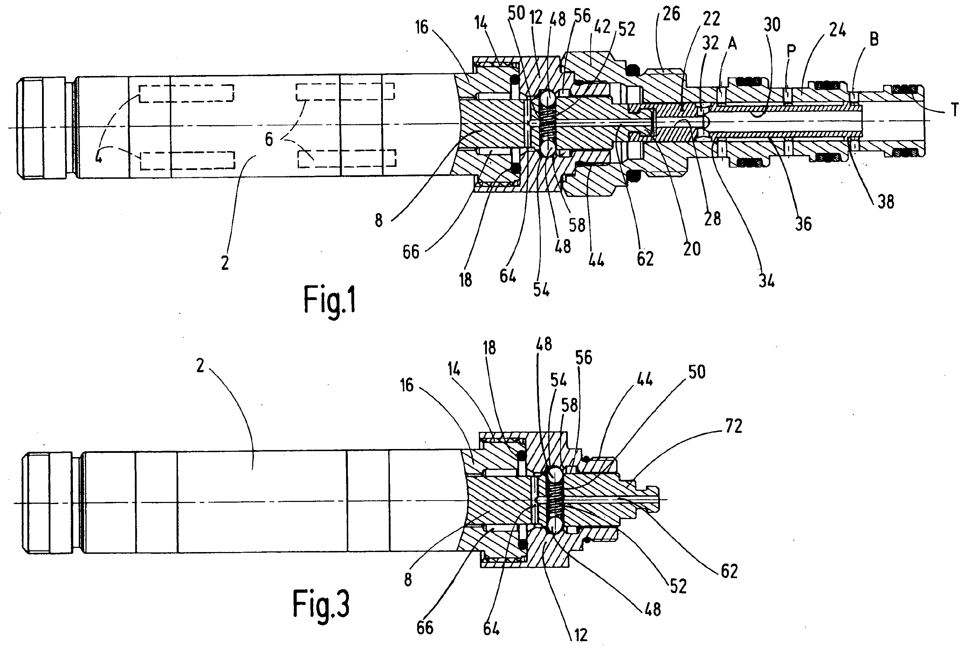

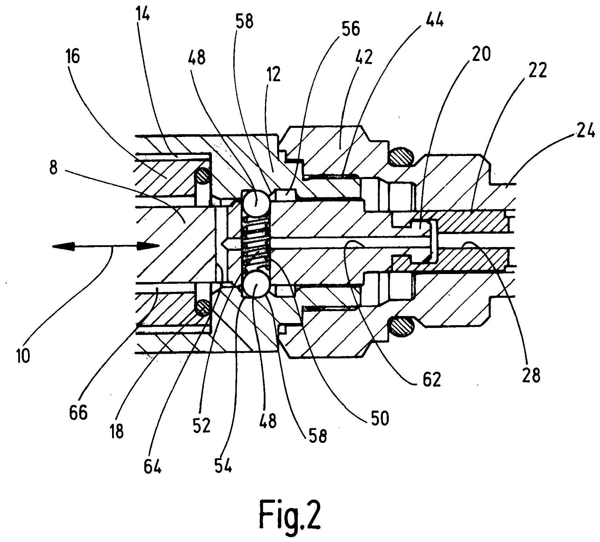

Unter Bezugnahme auf die Fig. 1 und 2 der Zeichnung ist die Erfindung am Beispiel eines 4/2-Wege-Schieberventils erläutert, das mittels eines Betätigungsmagneten 2 elektrisch betätigbar ist, der entsprechend dem Stand der Technik, wie er beispielhaft im Dokument DE 10 2004 017 088 B4 offenbart ist, zwei gesondert bestrombare, in Axialrichtung des zugehörigen Ankers nebeneinander angeordnete Spulen 4 und 6 aufweist. Je nachdem, welche der Spulen 4 oder 6 bestromt ist, bildet der Betätigungsmagnet 2 einen sog. "drückenden" oder "ziehenden" Magnet, der eine Verfahrbewegung des Ankers und seines in den Figuren mit 8 bezeichneten vorderen Ankerteils in der einen oder anderen Richtung ermöglicht, wie in Fig. 2 mit Doppelpfeil 10 angedeutet. Das vordere Ankerteil 8 ist in einem Adapter 12 geführt, das über eine magnetische Trennstelle 14 mit dem Ende des Polrohr-Gehäuses 16 des Betätigungsmagneten 2 verbunden ist, wobei eine Abdichtung mittels eines Dichtringes 18 gebildet ist. Das aus dem Ende des Adapters 12 vorstehende Ende 20 des Ankerteils 8 ist mit einem Steuerschieber 22 des zugeordneten 4/2-Wege-Schieberventils mechanisch verbunden.

Das den Steuerschieber 22 in axialer Durchgangsbohrung längsverschiebbar führende Ventilgehäuse 24 ist beim gezeigten Ausführungsbeispiel als Ventilpatrone ausgebildet, die mit einem Einschraubgewinde 26 in einen (nicht gezeigten) Ventilblock derart einschraubbar ist, dass Fluidverbindungen zu Anschlussstellen gebildet werden, nämlich zu einem Druckanschluss P sowie zu Nutzanschlüssen A und B, die jeweils durch Bohrungen in der Wand des Ventilgehäuses 24 gebildet sind, die in den inneren Durchgang des Ventilgehäuses 24 münden. Das in Fig. 1 rechts gelegene offene Ende des Ventilgehäuses 24 bildet die Anschlussstelle für den Tankanschluss T oder eines sonstigen Niederdruckanschlusses. Der Steuerschieber 22 weist einen koaxialen inneren Kanal auf, der sich von einem Ende des Steuerschiebers 22 zum anderen Ende durchgehend erstreckt. In dem an die Verbindungsstelle mit dem Ende 20 des Ankerteils 8 angrenzenden Abschnitt ist der Kanal durch eine Bohrung 28 gebildet, die einen geringeren Durchmesser als der übrige, bis zum offenen freien Ende führende Kanalabschnitt 30 besitzt. Am Übergang der Bohrung 28 zum Kanalabschnitt 30 ist eine Querbohrung 32 gebildet, die an der Außenseite des Steuerschiebers 22 mündet. An die Querbohrung 32 schließt sich eine am Steuerschieber 22 radial vorstehende Ringrippe 34 an, an die sich wiederum ein im Durchmesser verringerter Längenabschnitt des Steuerschiebers 22 anschließt, dessen Außenseite einen Fluidraum 36 bildet, der an dem der Querbohrung 32 zugewandten Ende durch die radial vorstehende Ringrippe 34 begrenzt ist. Das dem freien Ende des Steuerschiebers 22 benachbarte Ende des Fluidraums 36 ist durch eine zweite radial vorstehende Ringrippe 38 gebildet.

Bei der gezeigten Anordnung, bei der sich der Druckanschluss P im mittleren Bereich des Fluidraums 36 und Nutzanschlüsse A und B sich im Bereich der Enden des Fluidraums 36 befinden, ist das gebildete 4/2-Wege-Schieberventil bei der in Fig. 1 gezeigten Position des Steuerschiebers 22 in dem Schaltzustand, bei dem der Druckanschluss P mit dem Nutzanschluss A verbunden ist und der Nutzanschluss B mit dem Tankanschluss T in Verbindung ist. Eine Verfahrbewegung des Steuerschiebers 22 aus dieser Position nach rechts (Blickrichtung Fig. 1) verbindet den Druckanschluss P mit dem Nutzanschluss B, während der Nutzanschluss A über die Querbohrung 32 und den Kanalabschnitt 30 mit dem Tankanschluss T in Verbindung ist. Für die entsprechende Ventilbetätigung mittels des Betätigungsmagneten 2 ist das Ventilgehäuse 24 mittels einer Gewindemuffe 42, die das in Fig. 1 linksseitig gelegene offene Ende des Ventilgehäuses 24 bildet, mit einem Anschlussgewinde 44 verschraubt, das sich am freien Ende des Adapters 12 befindet.

Die Einzelheiten einer Rasteinrichtung, mittels deren der Steuerschieber 22 in der jeweilig eingenommenen Position oder Schaltstellung bei Ausfall der vom Betätigungsmagneten 2 erzeugten Betätigungskraft gesichert ist, sind am deutlichsten der Fig. 2 entnehmbar. Wie gezeigt, ist die mittels Rastkugeln 48 gebildete Verrastung zwischen dem Adapter 12 und dem darin geführten Ankerteil 8 wirksam. In diesem ist eine zur Verfahrachse senkrechte Querbohrung 50 ausgebildet, in der sich eine Schraubendruckfeder 52 sowie die Rastkugeln 48 befinden, die durch die Druckfeder 52 für einen Austritt aus der Bohrung 50 vorgespannt sind. Für jede definierte Position oder Schaltstellung ist den Rastkugeln 48 jeweils eine Rastkerbe 54 bzw. 56 zugeordnet, die voneinander in einem axialen Abstand angeordnet sind, der der Länge des Verfahrweges des Steuerschiebers 22 zwischen dessen definierten Schaltstellungen entspricht. Die Rastkerben 54, 56 sind jeweils durch eine umlaufende Ringnut im Durchgang des Adapters 12 gebildet, die an der der jeweils benachbarten Ringnut zugewandten Seite jeweils durch eine Schrägfläche 58 (s. Fig. 2) begrenzt sind. Dadurch ist eine sichere Entrastung bei normaler vom Betätigungsmagneten 2 erzeugter Betätigungskraft gewährleistet, während gleichzeitig eine bleibende Verrastung bei Ausfall der Betätigungskraft sichergestellt ist. Wie Fig. 1 und 2 ebenfalls zeigen, ist im vorderen Abschnitt des Ankerteils 8 ein koaxialer Längskanal 62 ausgebildet, der hinter der Querbohrung 50 in einem Querkanal 64 endet, der wiederum in einen den Ankerteil 8 umgebenden Zwischenraum 66 im Gehäuse 16 des Betätigungsmagneten 2 einmündet. Über die so gebildeten Verbindungen befindet sich der den Anker umgebende Raum des Betätigungsmagneten 2 auf dem Druckniveau des Tankanschlusses T, nach außen hin mittels des Dichtringes 18 abgedichtet.

Die in Fig. 1 und 2 für ein 4/2-Wege-Schieberventil gezeigte Sicherheitsverrastung ist auch für andersartige Ventile einsetzbar, die in definierten Ventilstellungen steuerbar sind. Die Fig. 3 zeigt eine entsprechende elektromagnetische Betätigungsvorrichtung als Betätigungsadapter, bei dem das entsprechend den vorgesehenen, definierten Schaltstellungen verrastbare Ankerteil 8 als Stellglied 72 am vorderen Ende der Betätigungsvorrichtung vorsteht und mit einem jeweils zu betätigenden Ventil kuppelbar ist. Dabei steht das Anschlussgewinde 44 am Ende des Polrohres 12 zur Verfügung, um die Vorrichtung als Betätigungsadapter am betreffenden Ventil anzubringen, beispielsweise in ein Ventilgehäuse einzuschrauben. Dabei kann es sich auch um ein Ventil handeln, das mehr als zwei definierte Schalt- oder Ventilstellungen besitzt, wobei anstelle der gezeigten beiden Rastkerben 54 und 56 eine entsprechende andere Zahl von Rastkerben dann vorgesehen ist.

## Patentansprüche

1. Ventil mit einem in einem Ventilgehäuse (24) längsverfahrbar geführten Steuerschieber (22), der mehrere Fluid-Anschlussstellen (P, A, B, T) im Ventilgehäuse (24) wahlweise fluidführend miteinander verbindet oder voneinander trennt, und der mittels mindestens eines Betätigungsmagneten (2) ansteuerbar ist, wobei eine Rasteinrichtung (48, 54, 56) dergestalt vorhanden ist, dass bei Ausfall des Betätigungsmagneten (2) der Steuerschieber (22) in einer definierten Position gehalten ist, **dadurch gekennzeichnet, dass** ein vorderes Ankerteil (8) des Betätigungsmagneten (2) in einem Adapter (12) geführt ist, der über eine magnetische Trennstelle (14) mit einem Ende eines Polrohr-Gehäuses (16) des Betätigungsmagneten (2) verbunden ist, und dass eine Abdichtung zwischen dem Pohlrohr-Gehäuse (16) und dem Adapter (12) mittels eines Dichtringes (18) gebildet ist.

2. Ventil nach Anspruch 1, **dadurch gekennzeichnet, dass** es als 4/2-Wege-Schieberventil mit einem Druckanschluss (P), zwei Nutzanschlüssen (A und B) und einem Tankanschluss (T) konzipiert ist und dass der Steuerschieber (22) durch die Rasteinrichtung (48, 54, 56) in einer ersten Position, in der der Druckanschluss (P) mit dem Nutzanschluss (A) und der Nutzanschluss (B) mit dem Tankanschluss (T) verbunden sind, und in einer zweiten Position gehalten ist, bei der der Druckanschluss (P) mit dem Nutzanschluss (B) und der Nutzanschluss (A) mit dem Tankanschluss (T) verbunden sind.

3. Ventil nach Anspruch 1 oder 2, **dadurch gekennzeichnet, dass** der Betätigungsmagnet (2) zwei gesondert bestrombare, in Axialrichtung des zugehörigen Ankers (8) nebeneinander angeordnete Spulen (4, 6) aufweist, die bei Bestromen die Verfahrbewegung des Ankers (8) und des mit ihm mechanisch verbundenen Steuerschiebers (22) in gegenläufige Richtungen in die erste oder zweite Position ermöglichen.

4. Ventil nach einem der vorstehenden Ansprüche, **dadurch gekennzeichnet, dass** die Rasteinrichtung (48, 54, 56) zwischen dem Anker oder einem mit diesem verbundenen Teil (8) und dem Adapter (12) oder einem mit diesem verbundenen Gehäuseteil des Betätigungsmagneten (2) wirksam ist.

5. Ventil nach Anspruch 4 **dadurch gekennzeichnet, dass** die Rasteinrichtung im Adapter (12) oder im damit verbundenen Gehäuseteil zwei Rastkerben (54, 56) in einem axialen Abstand voneinander aufweist, der der Länge des Verschiebeweges des Steuerschiebers (22) zwischen dessen erster und zweiter Position entspricht.

6. Ventil nach Anspruch 5 **dadurch gekennzeichnet, dass** in dem mit dem Steuerschieber (22) mechanisch verbundenen Anker oder dem mit diesem verbundenen Teil (8) eine zur Verfahrachse senkrechte Durchgangsbohrung (50) gebildet ist, die an den Enden je eine Rastkugel (48) aufnimmt, die durch eine in der Bohrung (56) befindliche Schraubenfeder (52) für den Eintritt in die Rastkerben (54, 56) nach außen hin vorgespannt sind.

7. Ventil nach Anspruch 5 **dadurch gekennzeichnet, dass** die Rastkerben (54, 56) an dem der jeweils anderen Rastkerbe (54, 56) zugewandten Ende durch eine Schrägfläche (58) begrenzt sind.

8. Vorrichtung mit mindestens einem Betätigungsmagneten (2) zur elektromagnetischen Betätigung von in definierte Ventilstellungen einstellbaren Ventilen, insbesondere von Schieberventilen, nach einem der Ansprüche 1 bis 7, **dadurch gekennzeichnet, dass** eine Rasteinrichtung (48, 54, 56) dergestalt vorhanden ist, dass ohne Energie des Betätigungsmagneten (2) der Magnetanker oder ein damit verbundener Teil (8) in einer definierten Position gehalten ist, und dass sie als Betätigungsadapter ausgebildet ist, an dem für die Anbringung am zu betätigenden Ventil eine Anschlussstelle (44) gebildet ist, an der der Anker oder ein damit verbundener Teil (8) zugänglich und mit dem Steuerschieber (22) des betreffenden Ventils kuppelbar ist.

9. Vorrichtung nach Anspruch 8, **dadurch gekennzeichnet, dass** sie als Anschraubadapter mit einem an der Anschlussstelle gebildeten Schraubgewinde (44) gestaltet ist, das mit dem Ende des Ventilgehäuses (24) des betreffenden Ventils verschraubbar ist.

## Claims

1. A valve comprising a control slide (22) guided such that it can be displaced longitudinally within a valve housing (24) and which optionally connects a number of fluid connection points (P, A, B, T) in the valve housing (24) such as to convey fluid, or separates them from one another, and which can be actuated by means of at least one actuation magnet (2), a locking device (48, 54, 56) being provided such that if the actuation magnet (2) fails, the control slide (22) is held in a defined position, **characterised in that** a front armature part (8) of the actuation magnet (2) is guided in an adapter (12) which is connected to one end of a pole tube housing (16) of the actuation magnet (2) over a magnetic separation point (14), and that a seal is formed between the pole tube housing (16) and the adapter (12) by means of a sealing ring (18).

2. The valve according to Claim 1, **characterised in that** it is designed as a 4/2-way slide valve with a pressure port (P), two utility ports (A and B) and a tank port (T) and that the control slide (22) is held by the locking device (48, 54, 56) in a first position in which the pressure port (P) is connected to the utility port (A) and the utility port (B) is connected to the tank port (T), and in a second position in which the pressure port (P) is connected to the utility port (B) and the utility port (A) is connected to the tank port (T).

3. The valve according to Claim 1 or 2, **characterised in that** the actuation magnet (2) has two coils (4, 6) arranged next to one another in the axial direction of the corresponding armature (8) and which can be energised separately, which coils enable the displacement movement of the armature (8) and of the control slide (22) connected mechanically to it in opposite directions into the first or the second position upon being energised.

4. The valve according to any of the preceding claims, **characterised in that** the locking device (48, 54, 56) is effective between the armature or a part (8) connected to the latter and the adapter (12) or a housing part of the actuation magnet (2) connected to the latter.

5. The valve according to Claim 4, **characterised in that** the locking device in the adapter (12) or in the housing part connected to it has two detent notches (54, 56) spaced apart axially from one another by a distance which corresponds to the length of the path of displacement of the control slide (22) between its first and its second position.

6. The valve according to Claim 5, **characterised in that** there is formed in the armature mechanically connected to the control slide (22) or in the part (8) connected to the armature a through hole (50) perpendicular to the axis of movement, which through hole receives a detent ball (48) at each of the ends, which detent balls are pre-stressed outwardly by a helical spring (52) located in the bore hole (56) so that they can pass into the detent notches (54, 56).

7. The valve according to Claim 5, **characterised in that** the detent notches (54, 56) are delimited by an inclined surface (58) on the end facing the respective other detent notch (54, 56).

8. An apparatus comprising at least one actuation magnet (2) for electromagnetically actuating valves, in particular slide valves, that can be set in defined valve positions, according to any of Claims 1 to 7, **characterised in that** a locking device (48, 54, 56) is provided such that without the energy of the actuation magnet (2) the magnet armature or a part (8) connected to it is held in a defined position, and that it is in the form of an actuation adapter on which a connection point (44) for attachment to the valve to be actuated is formed, at which connection point the armature or a part (8) connected to it is accessible and can be coupled to the control slide (22) of the respective valve.

9. The apparatus according to Claim 8, **characterised in that** it is made in the form of a screw-on adapter with a screw thread (44) formed at the connection point, which screw thread can be screwed together with the end of the valve housing (24) of the respective valve.

## Revendications

1. Soupape comprenant un coulisseau (22) de commande, qui est guidé de manière à pouvoir se déplacer longitudinalement dans un corps (24) de soupape et qui au choix met en communication fluidique, les uns avec les autres, des points (P, A, B, T) de raccord de fluide du corps (24) de la soupape ou les sépare, et qui peut être commandé au moyen d'au moins un aimant (2) d'actionnement, un dispositif (48, 54, 56) d'encliquetage étant présent, de manière à maintenir, si l'aimant (2) d'actionnement est défaillant, le coulisseau (22) de commande en une position définie, **caractérisée en ce qu'**une partie (8) avant d'armature de l'aimant (2) d'actionnement est guidée dans un adaptateur (12), qui est relié par l'intermédiaire d'un point (14) de séparation magnétique à une extrémité d'un boîtier (16) de tube polaire de l'aimant (2) d'actionnement, et **en ce qu'**une étanchéité, entre le boîtier (16) de tube polaire et l'adaptateur (12),est formée au moyen d'un joint (18) torique.

2. Soupape suivant la revendication 1, **caractérisée en ce qu'**elle est conçue sous la forme d'une soupape à coulisse à 4/2 voies ayant un raccord (P) de pression, deux raccords (A et B) utiles et un raccord (T) de réservoir et **en ce que** le coulisseau (22) de commande est maintenu par le dispositif (48, 54, 56) d'encliquetage dans une première position dans laquelle le raccord (P) de pression communique avec le raccord (A) utile et le raccord (B) utile avec le raccord (T) de réservoir et dans une deuxième position dans laquelle le raccord (P) de pression communique avec le raccord (B) utile et le raccord (A) utile avec le raccord (T) de réservoir.

3. Soupape suivant la revendication 1 ou 2, **caractérisée en ce que** l'aimant (2) d'actionnement a deux bobines (4, 6), qui peuvent être alimentées séparément en courant, qui sont disposées l'une à côté de l'autre dans la direction axiale de l'armature (8) associée et qui, lorsqu'elles sont alimentées en courant, rendent possible le mouvement de déplacement de l'armature (8) et du coulisseau (22) de commande qui lui est relié mécaniquement en sens contraire dans la première ou la deuxième position.

4. Soupape suivant l'une des revendications précédentes, **caractérisée en ce que** le dispositif (48, 54, 56) d'encliquetage est efficace entre l'armature ou une partie (8), qui lui est reliée, et l'adaptateur (12) ou une partie de boîtier, qui lui est reliée, de l'aimant (2) d'actionnement.

5. Soupape suivant la revendication 4, **caractérisée en ce que** le dispositif d'encliquetage a, dans l'adaptateur (12), dans la partie de boîtier qui lui est reliée, deux encoches (54, 56) d'encliquetage à une distance axiale l'une de l'autre qui correspond à la longueur du trajet de déplacement du coulisseau (22) de commande en sa première et deuxième position.

6. Soupape suivant la revendication 5, **caractérisée en ce que**, dans l'armature reliée mécaniquement au coulisseau (22) de commande ou dans la partie (8) qui lui est reliée, est formé un trou (50) de passage, qui est perpendiculaire à l'axe de déplacement et qui reçoit aux extrémités respectivement une bille (48) d'encliquetage , lesquelles sont, par un ressort (52) hélicoïdal se trouvant dans le trou (56), précontraintes vers l'extérieur pour l'entrée dans les encoches (54, 56) d'encliquetage.

7. Soupape suivant la revendication 5, **caractérisée en ce que**, les encoches (54, 56) d'encliquetage sont, à l'extrémité tournée vers l'autre encoche (54, 56) d'encliquetage, délimitées par une surface (58) commune.

8. Installation comprenant au moins un aimant (2) d'actionnement pour actionner électromagnétiquement des soupapes réglables en des positions définies, notamment des soupapes à coulisseau suivant l'une des revendications 1 à 7, **caractérisée en ce qu'**il y a un dispositif (48, 54, 56) d'encliquetage tel que, sans l'énergie de l'aimant (2) d'actionnement, l'armature de l'aimant ou une partie qui lui est reliée est maintenue en une position définie et **en ce qu'**elle est constituée en adaptateur d'actionnement sur lequel est formé, afin d'être mis sur la soupape à actionner, un point (44) de raccord où l'armature ou une partie (8) qui lui est reliée est accessible et peut être accouplée au coulisseau (22) de commande de la soupape concernée.

9. Installation suivant la revendication 8, **caractérisée en ce qu'**elle est conformée sous la forme d'un adaptateur à vis ayant un filetage (44), qui est formé au point de raccord et qui peut se visser à l'extrémité du corps (24) de la soupape concernée.
